(19) Europäisches Patentamt
European Patent Office
Office européen des brevets

(11) **EP 4 270 126 A1**

(12) **EUROPEAN PATENT APPLICATION**
published in accordance with Art. 153(4) EPC

(43) Date of publication:
01.11.2023 Bulletin 2023/44

(51) International Patent Classification (IPC):
*G05B 19/418* $^{(2006.01)}$  *G05B 13/04* $^{(2006.01)}$
*G06N 20/00* $^{(2019.01)}$

(21) Application number: 21911622.5

(22) Date of filing: 24.12.2021

(52) Cooperative Patent Classification (CPC):
Y02P 90/02

(86) International application number:
PCT/KR2021/019870

(87) International publication number:
WO 2022/139557 (30.06.2022 Gazette 2022/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.12.2020 KR 20200183255

(71) Applicant: **Pace Inc.**
**Pohang-si Gyeongsangbuk-do 37673 (KR)**

(72) Inventor: **HAN, Woo Joo**
**Yongin-si Gyeonggi-do 16940 (KR)**

(74) Representative: **Calysta NV**
**Lambroekstraat 5a**
**1831 Diegem (BE)**

(54) **METHOD FOR CONSTRUCTING DIGITAL TWIN BY COMBINING REDUCED ORDER MODELS, MEASUREMENT DATA AND MACHINE LEARNING TECHNIQUES FOR MULTIPHYSICAL EQUIPMENT SYSTEM**

(57) The purpose of the present invention is to provide a method for constructing a digital twin, enabling real-time monitoring, operation improvement, and coping with the occurrence of an accident in an industrial site by combining reduced order models of a multiphysical system, measurement data and artificial intelligence techniques, and the method for constructing a digital twin, according to the present invention, comprises: a network-defining step of defining a multiphysical engineering system as a network constituted by a combination of element facilities; an element model establishing step of establishing a relation-based 0-dimensional (0-D) model for each of the element facilities; a system model establishing step of closing all relations for a system by reflecting an additional relation by machine learning from a 3-dimensional computer aided engineering reduced order model (3-D CAE ROM) or data for key element facilities in the 0-D models established in the element model establishing step; a system ROM constructing step of constructing a system ROM for the system model established in the system model establishing step from calculation results for conditions sampled in an operating variable parameter space; a system ROM correcting step of minimizing an error between a model predicted value and measured data for the element facility and the system; and a real-time algorithm constructing step of constructing an algorithm for identifying an expected system state or an optimal operating condition in a virtual operating condition based on the real-time monitoring result.

FIG. 1

**Description**

[Technical Field]

The present invention relates to a method for constructing a digital twin, and particularly, to a method for constructing a digital twin by combining 0-dimensional (hereinafter referred to as "0-D") or multi-dimensional (1-D, 2-D, or 3-D) reduced order models (hereinafter referred to as "ROMs"), field data based on the Internet of Things (hereinafter referred to as "IoT"), and artificial intelligence techniques for a multiphysical engineering system.

[Background Art]

A digital twin is a twin model constructed in virtual space for a system composed of multi-physics facilities or multi-element facilities existing in a real space, and given all the conditions that determine an operating state, the digital twin should be able to determine the operating state and variables of interest, as in the real world.

Therefore, the digital twin should be able to accurately identify all variables of interest under current operating conditions (diagnosis mode), and predict all variables of interest under a virtual operating condition (prediction mode). In addition, the time required for such diagnosis and prediction should be short enough to provide real-time information to field operators.

"Patent Document 1" below discloses a method for constructing a reduced order model in which field measurement data and computer-aided engineering (CAE) analysis are combined through coupled-proper orthogonal decomposition (coupled-POD), but the method is limited to the technology of combining a 3-dimensional distribution given as the result of the measurement data and CAE analysis, and therefore it has a limitation that it is difficult to expand its application to a multiphysical system configured as a network of a plurality of element facilities.

(Patent Document 1) KR 10-2048243 B1 (November 25, 2019)

[Disclosure]

[Technical Problem]

An object of the present invention is to provide a method for constructing a digital twin capable of real-time monitoring, operation improvement, and response to accidents by combining a reduced order model (ROM) based on the simulation of a multiphysical engineering system, field data, and machine learning techniques.

[Technical Solution]

According to an embodiment of the present invention, a method for constructing a digital twin includes: a network-defining step of defining a multiphysical engineering system as a network constituted by a combination of element facilities; an element model establishing step of establishing a relation-based 0-D model for each of the element facilities; a system model establishing step of closing all relations for a system by reflecting an additional relation by machine learning from a 3-D CAE ROM or data for key element facilities in the 0-D models established in the element model establishing step; a system ROM constructing step of constructing a system ROM for the system model established in the system model establishing step from calculation results for conditions sampled in an operating variable parameter space; a system ROM correcting step of minimizing an error between a model predicted value and measured data for the element facility and the system; and a real-time algorithm constructing step of constructing an algorithm for identifying an expected system state or an optimal operating condition in a virtual operating condition based on the real-time monitoring result.

The system ROM correcting step may include any one of: a gappy-proper orthogonal decomposition (POD) correcting step of applying a gappy-POD method for driving a ROM from a matrix composed of all variables of interest obtained from conditions sampled in an operating variable parameter space and adjusting principal component coefficients of the ROM such that a sum of squared errors between a predicted value and a measured value is minimized; and an artificial intelligence correcting step of correcting the error using artificial intelligence techniques of machine learning by a neural network circuit based on accumulated data when a causal relationship or a functional relationship between an error between the predicted value and the data, an operating variable, and a predicted physical quantity is not clear.

As the gappy-POD method, the coupled gappy-POD method for adjusting principal component coefficients of the ROM by combining heterogeneous measured values may be applied.

The gappy-POD correcting step and the artificial intelligence correcting step may be performed independently of each other or sequentially and simultaneously.

In the system ROM correcting step, an appropriate weight may be assigned to each error according to the uncertainty of the measured value or the importance of main performance indicators while minimizing an error of a predicted value.

In the system ROM correcting step, to maintain the digital twin's accuracy, an automatic correction that minimizes an error between online measured data and the model predicted value may be performed periodically or when a significant change in facility operation occurs.

In the real-time algorithm constructing step, a condition for maximizing or minimizing a predefined performance variable or cost function in an operating variable parameter space may be found and presented to an operator in real time.

[Advantageous Effects]

A digital twin construction method, according to the present invention, has the following excellent effects.

i) From 0-D simulation for each element facility, 3-D CAE simulation for key facilities, and machine learning results from data. it is possible to construct a system reduced order model (system ROM) and a digital twin based on the system ROM, capable of real-time operation with fast response characteristics.

ii) By reflecting various online and offline measurement data through a gappy-POD or coupled gappy-POD method, it is possible to construct a corrected 3-D ROM for key facilities or a corrected ROM for the entire system and maintain the reliability and accuracy of a digital twin based on the corrected 3-D ROM or the corrected ROM.

iii) By applying different weights to variables according to the uncertainty of measurement data or the importance of affecting final performance variables during data assimilation, it is possible to minimize the uncertainty.

iv) A digital twin can be utilized in two modes of diagnosis and prediction, and optimal operating conditions can be presented in real time within a permitted operating range, which can be reflected in operation automation.

[Description of Drawings]

FIG. 1 is a flowchart sequentially illustrating the execution steps of a method for constructing a digital twin according to the present invention.

FIG. 2 is a diagram illustrating an example of a network defined for a city gas production process system according to the present invention.

FIG. 3 is a diagram illustrating a 0-D model relational expression for each element facility constituting the network of FIG. 2.

FIG. 4 is a diagram illustrating an open rack vaporizer as a key facility requiring 3-D CAE analysis.

FIG. 5 is a diagram illustrating a correction method according to a system ROM correcting step of the present invention, in which FIG. 5A illustrates a gappy-POD correcting step, and FIG. 5B illustrates a correction method according to an artificial intelligence correcting step.

FIG. 6 is a diagram illustrating an optimal operating case by a real-time algorithm according to a real-time algorithm constructing step of the present invention, in which FIG. 6A illustrates an optimal operating case for operating variable x (flow rate to open rack vaporizer), and FIG. 6B illustrates an optimal operating case for performance variable E (energy cost for unit NG production).

*Description of Main Elements in Drawings*

S 100: Network-defining step
S200: Element model establishing step
S300: System model establishing step
S400: System ROM constructing step
S500: System ROM correcting step
S510: Gappy-POD correcting step
S520: Artificial intelligence correcting step
S600: Real-time algorithm constructing step

[Best Mode]

Hereinafter, the method for constructing a digital twin according to the present invention is described in detail with reference to the accompanying drawings. However, a detailed description of the well-known functions and configurations that may unnecessarily make the gist of the present invention unclear is omitted.

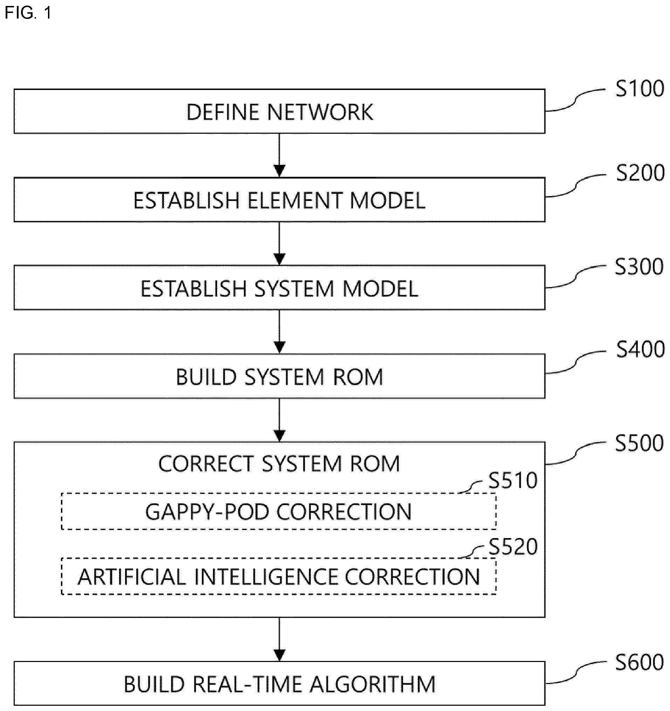

FIG. 1 is a flowchart sequentially illustrating the execution steps of a method for constructing a digital twin according to the present invention.

Referring to FIG. 1, the method for constructing a digital twin according to the present invention includes a network-defining step (S 100), an element model establishing step (S200), a system model establishing step (S300), a system reduced order model (ROM) constructing step (S400), a system ROM correcting step (S500), and real-time algorithm constructing step (S600).

Each step of the present invention may be performed by a program in which the present invention is implemented on the computer, and measurement data may be obtained by various IoT sensors provided in the field.

Some terms used in the present invention are defined as follows.

- Operating variable: Boundary conditions and operable variables that determine the overall state of an element facility or system, and all other variables that affect the current state.
- Variables of interest: All variables that are of interest to facility operators among variables representing a state of the element facility or system (generally, measurement variables and performance variables are included among variables of interest).
- Measurement variable: Variables that are measured online by various sensors for element facility or system.
- Performance variables: Variables representing element facilities or key performance of a system (for example, efficiency, lifetime, energy consumption, safety, amount of harmful exhaust gas, etc.).

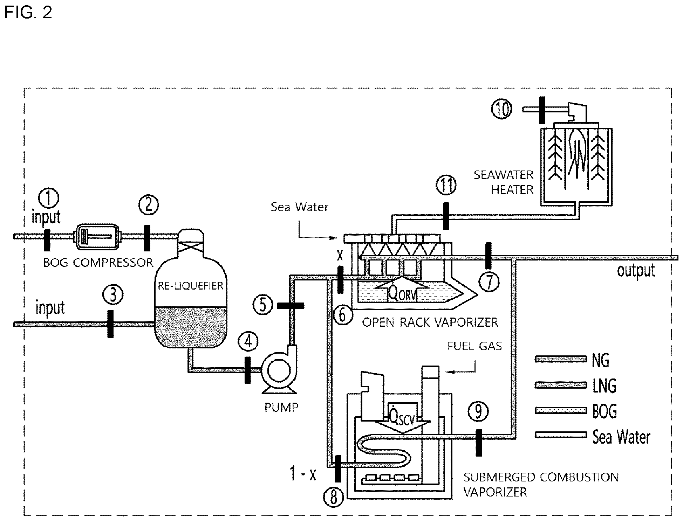

The network-defining step (S 100), which is the first step of the method for constructing a digital twin according to the present invention, is a step of defining the system as a network constituted by a combination of element facilities and connection media to construct a digital twin. FIG. 2 illustrates an example of a network defined for a city gas production process system. The city gas production process network illustrated in FIG. 2 involves converting liquefied natural gas (hereinafter referred to as 'NG') into gaseous NG with an open rack vaporizer that utilizes heat transfer from seawater and a submerged combustion vaporizer that utilizes combustion energy of fuel gas and supplying the gaseous NG. In this example, the amount of heat transferred to seawater is expressed as $\dot{Q}_{ORV}$, energy supplied from a burner is expressed as $\dot{Q}_{SCV}$, and a flow rate, temperature, pressure, and enthalpy at each point are expressed as $\dot{m}$, T, P, and h, respectively.

In this example, for simplicity, inlet flow rates $\dot{m}_1$ and $\dot{m}_3$, a flow rate x to the open rack vaporizer, and a flow rate $\dot{m}_{10}$ and a temperature $T_{10}$ of seawater are defined as operating variables. All variables involved in the element model and performance variables, such as energy cost E for unit NG production, may be defined as variables of interest. Table 1 shows operating variables, variables of interest, measurement variables, and performance variables arbitrarily determined to illustrate the present invention.

[Table 1]

| \Operating Variable | $\dot{m}_1, \dot{m}_3, \dot{m}_{10}$, T$_{10}$, x, |
| --- | --- |
| Variable of Interest | P$_2$, h$_2$, P$_4$, h$_4$, P$_5$, h$_5$, $\dot{Q}_{ORV}$, h$_{11}$, h$_7$, h$_9$ |
| Measurement Variable | P$_2$, h$_4$, P$_5$ |
| Performance Variable | E |

Next, the element model establishing step (S200) is a step of establishing a relational expression between major variables for each element facility.

Here, the relational expression represents a 0-D model that may determine the state of the facility according to the operating variable. When it is difficult to construct a model according to basic physical laws, a model based on machine learning, such as data regression and a neural network circuit, may be used, and a hybrid model that combines a physical model and a data-based model is also possible.

Next, the system model establishing step (S300) is a step of reflecting an additional relational expression by machine learning from a 3-D computer-aided engineering (3-D CAE) ROM or data for core element facilities to close all relational expressions for the system.

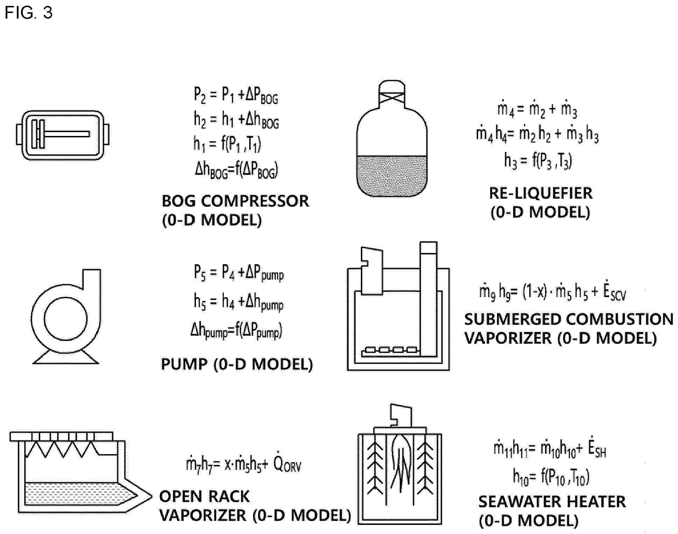

FIG. 3 illustrates a 0-D model relational expression for each element facility constituting the network of FIG. 2, which is composed of operating variables and variables of interest. In FIG. 3, all relational expressions for the system are closed only when additional information on the amount of heat $\dot{Q}_{ORV}$ transferred to seawater of a seawater heater is given.

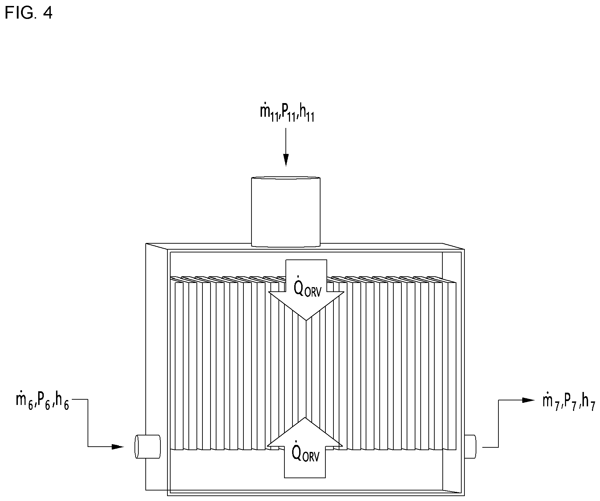

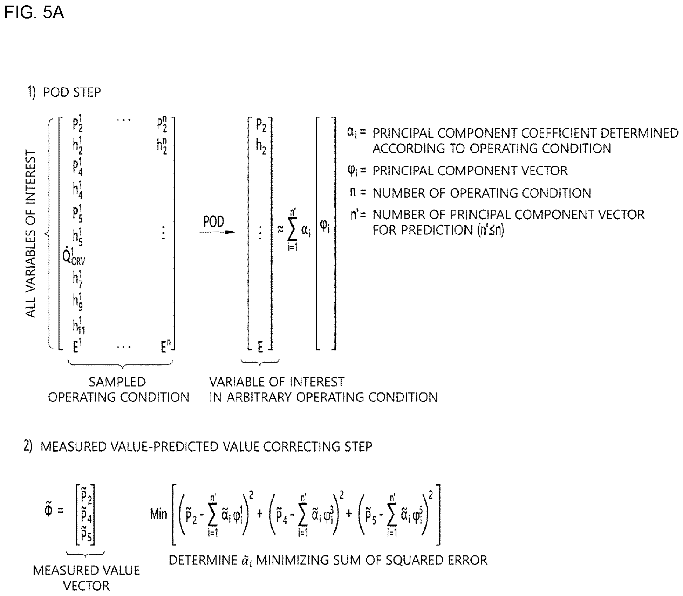

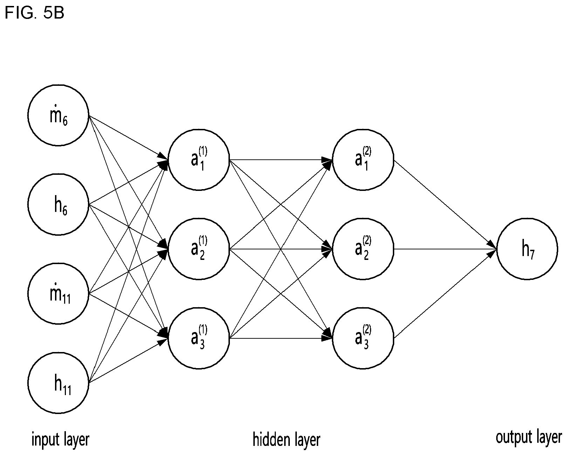

When the CAE analysis of the open rack vaporizer illustrated in FIG. 4 is performed, a 3-D ROM composed of principal component vectors and coefficients illustrated in FIG. 5A is obtained by proper orthogonal decomposition (hereinafter referred to as "POD") of a matrix composed of variables of interest, such as multi-dimensional distribution $\dot{Q}_{ORV}$ or , in the sampled operating conditions.

A new 0-D relational expression required for closure from the data analysis result by a 3-D ROM or values of variables of interest, such as $\dot{Q}_{ORV}$ in arbitrary operating conditions, may be easily obtained.

According to an example, a BOG compressor, a re-liquefier, a pump, a submerged combustion vaporizer, a seawater heater, and an open rack vaporizer constructing a 0-D model linked to 3-D CAE analysis, which are facility elements constructed with a 0-D model, are connected in the same way as the city gas production process network illustrated in FIG. 2, thereby constructing the system model for the entire process.

Meanwhile, the process of directly obtaining a solution of the relational expression for all the element facilities from the system model generally requires excessive calculation time, making it difficult to respond in real time. To solve this problem, the present invention further includes a step (S400) of constructing a system ROM from calculation results for conditions sampled in the operating variable parameter space.

Accordingly, in the present invention, it is possible to obtain fast prediction results that enable real-time response by obtaining the solution for the operating condition sampled in the system operating variable space in advance and constructing the matrix composed of all the variables of interest to derive the system ROM for the system model established in the system model establishing step (S300) through the method such as POD analysis.

Next, the system ROM correcting step (S500) is a step of minimizing the error between the model predicted value and measurement data for the element facility and system and includes a gappy-POD correcting step (S510) and an artificial intelligence correcting step (S520).

The gappy-POD correcting step (S510) is a step of applying a gappy-POD method for driving a ROM from a matrix composed of all variables of interest obtained from conditions sampled in an operating variable parameter space and adjusting principal component coefficients of the ROM such that a sum of squared errors between a predicted value and a measured value is minimized (see FIG. 5A). As the gappy-POD method, the coupled gappy-POD method for adjusting principal component coefficients of the ROM by combining heterogeneous measured values may be applied (see "Patent Document 1").

The artificial intelligence correcting step (S520) is a step of correcting errors using artificial intelligence techniques such as machine learning by a neural network circuit based on the accumulated data when the causal relationship or function relationship between the error between the predicted value and the data, the operating variable and the predicted physical quantity is not clear.

In the system ROM correcting step (S500), the gappy-POD correcting step (S510) and the artificial intelligence correcting step (S520) may be performed independently or sequentially and simultaneously.

According to the present invention, in the system ROM correcting step (S500), an appropriate weight may be assigned to each error according to the uncertainty of the measured value or the importance of the main performance indicators while minimizing the error of the predicted value. In addition, in order to maintain the accuracy of the digital twin, the automatic correction that minimizes the error between online measured data and the model predicted value may be performed periodically or when a significant change in facility operation occurs.

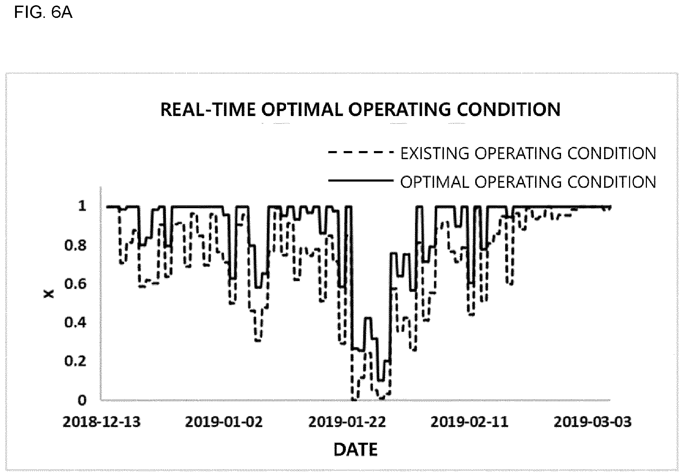

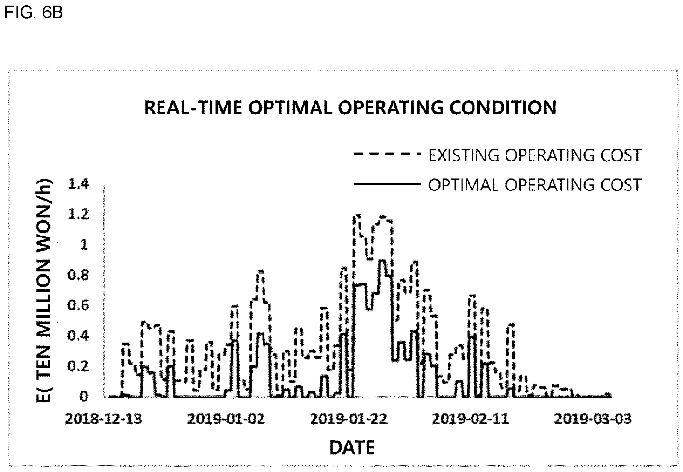

Finally, the real-time algorithm constructing step (S600) is a step of constructing an algorithm for identifying the system state expected from the virtual operating condition or the optimal operating condition based on the real-time monitoring result and may include finding conditions that maximize or minimize predefined performance variables or cost functions in the operating variable parameter space based on the system ROM constructed in previous steps and presenting the conditions to operators in real time (see Figure 6).

The embodiments disclosed in this specification and the accompanying drawings are only used for the purpose of easily explaining the technical spirit of the present invention and are not used to limit the scope of the present invention described in the claims. Therefore, it is to be understood by those skilled in the art that various modifications and other equivalent embodiments are possible.

**Claims**

1.  A method for constructing a digital twin, comprising:

    a network-defining step of defining a multiphysical engineering system as a network constituted by a combination of element facilities;
    an element model establishing step of establishing a relational expression-based 0-dimensional (0-D) model for each of the element facilities;
    a system model establishing step of closing all relational expressions for a system by reflecting an additional relational expression by machine learning from a 3-dimensional computer-aided engineering reduced order model (3-D CAE ROM) or data for key element facilities in the 0-D models established in the element model establishing step;
    a system ROM constructing step of constructing a system ROM for the system model established in the system model establishing step from calculation results for conditions sampled in an operating variable parameter space;
    a system ROM correcting step of minimizing an error between a model predicted value and measured data for the element facility and the system; and
    a real-time algorithm constructing step of constructing an algorithm for identifying an expected system state or an optimal operating condition in a virtual operating condition based on the real-time monitoring result.

2.  The method of claim 1, wherein the system ROM correcting step includes any one of:

    a gappy-POD correcting step of applying a gappy-POD method for driving a ROM from a matrix composed of all variables of interest obtained from conditions sampled in an operating variable parameter space and adjusting principal component coefficients of the ROM so that a sum of squared errors between a predicted value and a measured value is minimized; and
    when a causal relationship or a functional relationship between an error between the predicted value and the data, an operating variable, and a predicted physical quantity is not clear, an artificial intelligence correcting step of correcting the error using artificial intelligence techniques of machine learning by a neural network circuit based on accumulated data.

3.  The method of claim 2, wherein, as the gappy-POD method, the coupled gappy-POD method for adjusting principal component coefficients of the ROM by combining heterogeneous measured values is applied.

4.  The method of claim 2, wherein the gappy-POD correcting step and the artificial intelligence correcting step are performed independently of each other or sequentially and simultaneously.

5.  The method of claim 1, wherein, in the system ROM correcting step, an appropriate weight is assigned to each error according to uncertainty of a measured value or importance of main performance indicators while minimizing an error of a predicted value.

6.  The method of claim 1, wherein, in the system ROM correcting step, in order to maintain accuracy of the digital twin, automatic correction that minimizes an error between online measured data and the model predicted value is performed periodically or when a significant change in facility operation occurs.

7.  The method of claim 1, wherein, in the real-time algorithm constructing step, a condition maximizing or minimizing a predefined performance variable or cost function in an operating variable parameter space is found and presented to an operator in real-time.

FIG. 1

```
┌─────────────────────────────────────────────┐
│              DEFINE NETWORK                  │──── S100
└─────────────────────────────────────────────┘
                      │
                      ▼
┌─────────────────────────────────────────────┐
│         ESTABLISH ELEMENT MODEL             │──── S200
└─────────────────────────────────────────────┘
                      │
                      ▼
┌─────────────────────────────────────────────┐
│          ESTABLISH SYSTEM MODEL             │──── S300
└─────────────────────────────────────────────┘
                      │
                      ▼
┌─────────────────────────────────────────────┐
│             BUILD SYSTEM ROM                │──── S400
└─────────────────────────────────────────────┘
                      │
                      ▼
┌─────────────────────────────────────────────┐
│            CORRECT SYSTEM ROM               │──── S500
│  ┌───────────────────────────────────────┐  │
│  │        GAPPY-POD CORRECTION           │  │── S510
│  └───────────────────────────────────────┘  │
│  ┌───────────────────────────────────────┐  │
│  │   ARTIFICIAL INTELLIGENCE CORRECTION  │  │── S520
│  └───────────────────────────────────────┘  │
└─────────────────────────────────────────────┘
                      │
                      ▼
┌─────────────────────────────────────────────┐
│         BUILD REAL-TIME ALGORITHM           │──── S600
└─────────────────────────────────────────────┘
```

FIG. 2

FIG. 3

$$P_2 = P_1 + \Delta P_{BOG}$$
$$h_2 = h_1 + \Delta h_{BOG}$$
$$h_1 = f(P_1, T_1)$$
$$\Delta h_{BOG} = f(\Delta P_{BOG})$$

**BOG COMPRESSOR (0-D MODEL)**

$$\dot{m}_4 = \dot{m}_2 + \dot{m}_3$$
$$\dot{m}_4 h_4 = \dot{m}_2 h_2 + \dot{m}_3 h_3$$
$$h_3 = f(P_3, T_3)$$

**RE-LIQUEFIER (0-D MODEL)**

$$P_5 = P_4 + \Delta P_{pump}$$
$$h_5 = h_4 + \Delta h_{pump}$$
$$\Delta h_{pump} = f(\Delta P_{pump})$$

**PUMP (0-D MODEL)**

$$\dot{m}_9 h_9 = (1-x) \cdot \dot{m}_5 h_5 + \dot{E}_{SCV}$$

**SUBMERGED COMBUSTION VAPORIZER (0-D MODEL)**

$$\dot{m}_7 h_7 = x \cdot \dot{m}_5 h_5 + \dot{Q}_{ORV}$$

**OPEN RACK VAPORIZER (0-D MODEL)**

$$\dot{m}_{11} h_{11} = \dot{m}_{10} h_{10} + \dot{E}_{SH}$$
$$h_{10} = f(P_{10}, T_{10})$$

**SEAWATER HEATER (0-D MODEL)**

FIG. 4

FIG. 5A

1) POD STEP

$\alpha_i$ = PRINCIPAL COMPONENT COEFFICIENT DETERMINED ACCORDING TO OPERATING CONDITION

$\varphi_i$ = PRINCIPAL COMPONENT VECTOR

$n$ = NUMBER OF OPERATING CONDITION

$n'$ = NUMBER OF PRINCIPAL COMPONENT VECTOR FOR PREDICTION ($n' \leq n$)

SAMPLED OPERATING CONDITION

VARIABLE OF INTEREST IN ARBITRARY OPERATING CONDITION

2) MEASURED VALUE-PREDICTED VALUE CORRECTING STEP

$$\tilde{\Phi} = \begin{bmatrix} \tilde{P}_2 \\ \tilde{P}_4 \\ \tilde{P}_5 \end{bmatrix} \qquad \text{Min}\left[ \left(\tilde{P}_2 - \sum_{i=1}^{n'} \tilde{\alpha}_i \varphi_i^1\right)^2 + \left(\tilde{P}_4 - \sum_{i=1}^{n'} \tilde{\alpha}_i \varphi_i^3\right)^2 + \left(\tilde{P}_5 - \sum_{i=1}^{n'} \tilde{\alpha}_i \varphi_i^5\right)^2 \right]$$

MEASURED VALUE VECTOR

DETERMINE $\tilde{\alpha}_i$ MINIMIZING SUM OF SQUARED ERROR

FIG. 5B

input layer                    hidden layer                    output layer

FIG. 6A

REAL-TIME OPTIMAL OPERATING CONDITION

- - - - - EXISTING OPERATING CONDITION
———— OPTIMAL OPERATING CONDITION

FIG. 6B

**REAL-TIME OPTIMAL OPERATING CONDITION**

- - - - - EXISTING OPERATING COST
——— OPTIMAL OPERATING COST

## INTERNATIONAL SEARCH REPORT

| International application No. |
| --- |
| **PCT/KR2021/019870** |

**A.    CLASSIFICATION OF SUBJECT MATTER**

**G05B 19/418**(2006.01)i; **G05B 13/04**(2006.01)i; **G06N 20/00**(2019.01)i

According to International Patent Classification (IPC) or to both national classification and IPC

**B.    FIELDS SEARCHED**

Minimum documentation searched (classification system followed by classification symbols)

G05B 19/418(2006.01); G05B 13/02(2006.01); G05B 13/04(2006.01); G05B 23/02(2006.01); G06N 20/00(2019.01); G06N 5/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중물리 설비 시스템(multiphysics facility system), 요소 설비(element equipment), 0-D 모델(0-D model), 기계 학습(machine learning), 모델 예측값(model prediction), 오차(error), 모니터링(monitoring)

**C.    DOCUMENTS CONSIDERED TO BE RELEVANT**

| Category* | Citation of document, with indication, where appropriate, of the relevant passages | Relevant to claim No. |
| --- | --- | --- |
| A | KAPTEYN, Michael G. et al. Toward predictive digital twins via component-based reduced-order models and interpretable machine learning. In proceedings of 2020 AIAA Scitech Forum & Exhibition. Orlando, FL. 10 January 2020. See sections II-III; and figures 2-3. | 1-7 |
| A | BONDARENKO, Oleksiy et al. Development of a diesel engine's digital twin for predicting propulsion system dynamics. ScienceDirect, Energy. Volume 196, ISSN 0360-5442, 01 April 2020. See sections 3.1 and 4.1. | 1-7 |
| DA | KR 10-2048243 B1 (PACE INC.) 25 November 2019 (2019-11-25) See paragraph [0044]; and figure 2. | 1-7 |
| A | KR 10-2020-0081066 A (PUSAN NATIONAL UNIVERSITY INDUSTRY-UNIVERSITY COOPERATION FOUNDATION) 07 July 2020 (2020-07-07) See paragraph [0050]; and figure 3. | 1-7 |
| A | WO 2020-246662 A1 (GAONPLATFORM INC.) 10 December 2020 (2020-12-10) See paragraphs [0037]-[0072]; and figure 2. | 1-7 |

☑ Further documents are listed in the continuation of Box C.      ☑ See patent family annex.

| * Special categories of cited documents: | |
| --- | --- |
| "A"   document defining the general state of the art which is not considered to be of particular relevance | "T"   later document published after the international filing date or priority date and not in conflict with the application but cited to understand the principle or theory underlying the invention |
| "D"   document cited by the applicant in the international application | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **28 March 2022** | **28 March 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 270 126 A1

**INTERNATIONAL SEARCH REPORT**

International application No.

**PCT/KR2021/019870**

**C.    DOCUMENTS CONSIDERED TO BE RELEVANT**

| Category* | Citation of document, with indication, where appropriate, of the relevant passages | Relevant to claim No. |
|---|---|---|
| PX | KR 10-2261942 B1 (PACE INC.) 07 June 2021 (2021-06-07)<br>See claims 1-7.<br>(※ This document is a published earlier application that serves as a basis for claiming priority of the present international application.) | 1-7 |

Form PCT/ISA/210 (second sheet) (July 2019)

## INTERNATIONAL SEARCH REPORT
### Information on patent family members

International application No.

**PCT/KR2021/019870**

| Patent document cited in search report | | | Publication date (day/month/year) | Patent family member(s) | | | Publication date (day/month/year) |
|---|---|---|---|---|---|---|---|
| KR | 10-2048243 | B1 | 25 November 2019 | WO | 2021-049858 | A1 | 18 March 2021 |
| KR | 10-2020-0081066 | A | 07 July 2020 | WO | 2020-138603 | A1 | 02 July 2020 |
| WO | 2020-246662 | A1 | 10 December 2020 | KR | 10-2020-0139991 | A | 15 December 2020 |
| | | | | KR | 10-2235808 | B1 | 02 April 2021 |
| KR | 10-2261942 | B1 | 07 June 2021 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102048243 B1